(19) Europäisches Patentamt European Patent Office Office européen des brevets

(11) **EP 4 455 640 B1**

(12) **EUROPEAN PATENT SPECIFICATION**

(45) Date of publication and mention of the grant of the patent:
**17.12.2025 Bulletin 2025/51**

(21) Application number: **23853723.7**

(22) Date of filing: **04.07.2023**

(51) International Patent Classification (IPC):
**G01N 21/64** (2006.01)     **G02B 21/00** (2006.01)

(52) Cooperative Patent Classification (CPC):
**G02B 21/0032; G02B 21/0048; G02B 21/0076;**
G02B 2207/114

(86) International application number:
**PCT/CN2023/105690**

(87) International publication number:
**WO 2024/183199 (12.09.2024 Gazette 2024/37)**

(54) **TWO-PHOTON SYNTHETIC APERTURE IMAGING METHOD AND APPARATUS BASED ON DIFFRACTION-LIMIT-SIZED SMALL APERTURE**

ZWEIPHOTONEN-BILDGEBUNGSVERFAHREN MIT SYNTHETISCHER APERTUR UND VORRICHTUNG AUF BASIS EINER KLEINEN APERTUR MIT BEUGUNGSLIMIT

PROCÉDÉ ET APPAREIL D'IMAGERIE À SYNTHÈSE D'OUVERTURE À DEUX PHOTONS REPOSANT SUR UNE PETITE OUVERTURE DE TAILLE LIMITE DE DIFFRACTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.03.2023 CN 202310220180**

(43) Date of publication of application:
**30.10.2024 Bulletin 2024/44**

(73) Proprietor: **Tsinghua University**
**Haidian District**
**Beijing 100084 (CN)**

(72) Inventors:
• **DAI, Qionghai**
  **Beijing 100084 (CN)**
• **ZHAO, Zhifeng**
  **Beijing 100084 (CN)**
• **WU, Jiamin**
  **Beijing 100084 (CN)**

(74) Representative: **Ipsilon**
**12 Avenue d'Italie**
**75013 Paris (FR)**

(56) References cited:
WO-A1-2015/124648     WO-A1-2017/139885
CN-A- 106 842 529     CN-A- 110 006 861
CN-A- 110 954 523     CN-A- 111 693 496
CN-A- 111 856 737     CN-A- 113 466 190
CN-A- 116 337 830     US-A1- 2014 008 549
US-A1- 2016 320 602

• ZHAO ZHIFENG ET AL: "Two-photon synthetic aperture microscopy for minimally invasive fast 3D imaging of native subcellular behaviors in deep tissue", CELL, ELSEVIER, AMSTERDAM NL, vol. 186, no. 11, 12 May 2023 (2023-05-12), pages 2475, XP087323514, ISSN: 0092-8674, [retrieved on 20230512], DOI: 10.1016/J.CELL.2023.04.016
• YANG YANLONG ET AL: "Laser scanning stereomicroscopy for fast volumetric imaging with two-photon excitation and scanned Bessel beams", PROGRESS IN BIOMEDICAL OPTICS AND IMAGING, SPIE - INTERNATIONAL SOCIETY FOR OPTICAL ENGINEERING, BELLINGHAM, WA, US, vol. 9329, 3 March 2015 (2015-03-03), pages 93292W - 93292W, XP060049223, ISSN: 1605-7422, ISBN: 978-1-5106-0027-0, DOI: 10.1117/12.2079646

- JANIAK F. K. ET AL: "Non-telecentric two-photon microscopy for 3D random access mesoscale imaging", vol. 13, no. 1, 27 January 2022 (2022-01-27), XP055944549, Retrieved from the Internet <URL:https://www.nature.com/articles/s41467-022-28192-0.pdf> DOI: 10.1038/s41467-022-28192-0
- HILLMAN ELIZABETH MC ET AL: "High-speed 3D imaging of cellular activity in the brain using axially-extended beams and light sheets", CURRENT OPINION IN NEUROBIOLOGY, LONDON, GB, vol. 50, 9 April 2018 (2018-04-09), pages 190 - 200, XP085403549, ISSN: 0959-4388, DOI: 10.1016/J.CONB.2018.03.007
- CHANG BO-JUI ET AL: "Real-time multi-angle projection imaging of biological dynamics", NATURE METHODS, NATURE PUBLISHING GROUP US, NEW YORK, vol. 18, no. 7, 28 June 2021 (2021-06-28), pages 829 - 834, XP037501719, ISSN: 1548-7091, [retrieved on 20210628], DOI: 10.1038/S41592-021-01175-7
- SEAN QUIRIN ET AL: "Simultaneous imaging of neural activity in three dimensions", FRONTIERS IN NEURAL CIRCUITS, vol. 8, 3 April 2014 (2014-04-03), XP055605124, ISSN: 1662-5110, DOI: 10.3389/fncir.2014.00029

**Description**

**CROSS-REFERENCE TO RELATED APPLICATIONS**

This application is based on and claims priority to Chinese Patent Application No. 202310220180.3 filed on March 07, 2023.

**FIELD**

The present disclosure relates to the technical field of microscopy, and particularly, to a two-photon synthetic aperture imaging method and apparatus based on a diffraction limit hole.

**BACKGROUND**

The two-photon microscope is a new technology combining a laser scanning confocal microscope and a two-photon excitation technology. Compared with a single-photon microscope, the two-photon microscope has advantages such as strong anti-scattering capability, deep penetration depth, excellent chromatography capability.

In the related art, a conventional two-photon microscope has data flux limitation, which limits an imaging speed thereof. A rapid body imaging can be implemented by expanding a depth-of-field range of excitation, such as reducing a diameter of a light beam of an incident aperture and using a small aperture excitation.

However, in the related art, when the depth-of-field range is enlarged by using the small aperture excitation, transverse resolution of an imaging result is lowered, which affects quality of a final imaging result. Thus, it is impossible to improve a resolution of a three-dimensional imaging space of the sample while guaranteeing a high-speed body imaging of the microscope. Therefore, it is urgent to improve the insufficient practicality and reliability. CN113466190A discloses a multi-mode multi-photon laser scanning stereoscopic microscopic imaging device and method, belonging to the field of three-dimensional optical microscopic imaging technology.

**SUMMARY**

The present disclosure provides a two-photon synthetic aperture imaging method and apparatus based on a diffraction limit hole, an electronic device, and a storage medium, aiming to solve problems in the related art, i.e., when the depth-of-field range is enlarged by using the small aperture excitation, the transverse resolution of an imaging result is lowered, which affects quality of a final imaging result, such that it is impossible to improve a resolution of a three-dimensional imaging space of the sample while guaranteeing a high-speed body imaging of the microscope, and the insufficient practicality and reliability.

According to embodiments in a first aspect of the present disclosure, provided is a two-photon synthetic aperture imaging method based on a diffraction limit hole, including: collecting, based on a two-photon synthetic aperture microscope (two-photon synthetic aperture microscope), three-dimensional sample projection information from different view angles by using a small-aperture excitation light beam constrained through a predetermined diffraction limit hole; obtaining three-dimensional sample information in accordance with the three-dimensional sample projection information based on a predetermined three-dimensional reconstruction algorithm; and generating a two-photon synthetic aperture imaging result based on the three-dimensional sample information. A size of the predetermined diffraction limit hole is determined by a magnification factor from an imaging plane to the diffraction limit hole in the two-photon synthetic aperture microscope. Here, the size of the predetermined diffraction limit hole is:

$$M * \frac{\lambda}{2 \times NA_{sub}},$$

where $M$ is a magnification factor between the imaging plane and a position of the diffraction limit hole, $\lambda$ is a wavelength of the excitation light beam, and $NA_{sub}$ is a numerical aperture (NA) of a small aperture excitation.

Specifically, in an embodiment of the present disclosure, a location of the predetermined diffraction limit hole in the two-photon synthetic aperture microscope is conjugated with an imaging plane.

According to the embodiments in a second aspect of the present disclosure, provided is an two-photon synthetic aperture imaging apparatus based on a diffraction limit hole, including: a two-photon synthetic aperture microscope; a predetermined diffraction limit hole; a collection module configured to collect, based on a two-photon synthetic aperture microscope, three-dimensional sample projection information from different view angles by using a small-aperture excitation light beam constrained through a predetermined diffraction limit hole; an obtaining module configured to obtain three-dimensional sample information in accordance with the three-dimensional sample projection information based on a predetermined three-dimensional reconstruction algorithm; and an imaging module configured to generate a two-photon synthetic aperture imaging result based on the three-dimensional sample information. A size of the predetermined diffraction limit hole is determined by a magnification factor from an imaging plane to the diffraction limit hole in the two-photon synthetic aperture microscope. Here, the size of the predetermined diffraction limit hole is:

$$M * \frac{\lambda}{2 \times NA_{sub}},$$

where $M$ is a magnification factor between the imaging plane and a position of the diffraction limit hole, $\lambda$ is a wavelength of the excitation light beam, and $NA_{sub}$ is a numerical aperture of a small aperture excitation.

Specifically, in an embodiment of the present disclosure, a location of the predetermined diffraction limit hole in the two-photon synthetic aperture microscope is conjugated with an imaging plane.

According to the embodiments in a third aspect of the present disclosure, provided is an electronic device, including: a two-photon synthetic aperture microscope; a predetermined diffraction limit hole; a memory; a processor; and a computer program stored on the memory and executable on the processor. The processor executes the program to implement the two-photon synthetic aperture imaging method based on the diffraction limit hole according to the above embodiments.

According to the embodiments in a fourth aspect of the present disclosure, provided is a computer-readable storage medium, having a computer program stored thereon. The program is executed by a processor to implement the two-photon synthetic aperture imaging method based on the diffraction limit hole as described above.

According to the embodiments of the present disclosure, the projection information from different view angles can be obtained by using the diffraction limit hole, to obtain a three-dimensional imaging result of the two-photon synthetic aperture microscope, which expands high-frequency component of excitation light and improves a body imaging speed of the microscope and space resolution of the imaging result, further realizing rapid and efficient high-quality sample imaging. Consequently, the method is more practical and reliable. Therefore, the problems in the related art, i.e., when the depth-of-field range is enlarged by using the small aperture excitation, the transverse resolution of an imaging result is lowered, which affects quality of a final imaging result, such that it is impossible to improve a resolution of a three-dimensional imaging space of the sample while guaranteeing a high-speed body imaging of the microscope, and the insufficient practicality and reliability, can be solved.

Additional aspects and advantages of the present disclosure will be provided at least in part in the following description, or will become apparent at least in part from the following description, or can be learned from practicing of the present disclosure.

## BRIEF DESCRIPTION OF THE DRAWINGS

The above and/or additional aspects and advantages of the present disclosure will become apparent and readily appreciated from the following description of the embodiments in conjunction with the accompanying drawings.

FIG. 1 is a flowchart of a two-photon synthetic aperture imaging method based on a diffraction limit hole according to an embodiment of the present disclosure.

FIG. 2 is a schematic operation diagram of a two-photon synthetic aperture microscope according to an embodiment of the present disclosure.

FIG. 3 is a display diagram of a point spread function (PSF) and an optical transfer function (OTF) of a two-photon synthetic aperture microscope according to an embodiment of the present disclosure.

FIG. 4 is a schematic diagram illustrating a comparison of PSF and OTF of each of a conventional two-photon microscope (TPM), a conventional two-photon small aperture imaging microscope, and a two-photon synthetic aperture microscope according to an embodiment of the present disclosure.

FIG. 5 is a schematic diagram illustrating a comparison of PSF and OTF of a two-photon synthetic aperture microscope with a size variable of a diffraction limit hole according to an embodiment of the present disclosure.

FIG. 6 is a schematic diagram illustrating a comparison of PSF and OTF of a two-photon synthetic aperture microscope with a numerical aperture variable of a diffraction limit hole according to an embodiment of the present disclosure.

FIG. 7 is a structural schematic diagram of a two-photon synthetic aperture imaging apparatus based on a diffraction limit hole according to an embodiment of the present disclosure.

FIG. 8 is a structural schematic diagram of an electronic device according to an embodiment of the present disclosure.

## DETAILED DESCRIPTION

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

The two-photon synthetic aperture imaging method and apparatus based on a diffraction limit hole provided by embodiments of the present disclosure are described below with reference to the drawings. As mentioned above in the background, for problems in the related art, i.e., when the depth-of-field range is enlarged by using the small aperture excitation, the transverse resolution of an imaging result is lowered, which affects quality of a final imaging result, such that it is impossible to improve a resolution of a three-dimensional imaging space of the sample while guaranteeing a high-speed body imaging of the microscope, and the insufficient practicality and reliability, the present disclosure provides a two-photon synthetic aperture imaging method based on a diffraction limit hole. In the method, projection information from different view angles can be obtained by using the diffraction limit hole, thereby obtaining a three-dimensional imaging result of a two-photon synthetic aperture microscope. In this way, the high-frequency component of excitation light can be expanded, and a body imaging speed of the microscope and space resolution of the imaging result can be improved, thereby achieving rapid and efficient high-quality sample imaging. Consequently, the method is more practical and reliable. Therefore, the problems in the related art, i.e., when the depth-of-field range is enlarged by using the small aperture excitation, the transverse resolution of an imaging result is lowered, which affects quality of a final imaging result, such that it is impossible to improve a resolution of a three-dimensional imaging space of the sample while guaranteeing a high-speed body imaging of the microscope, and the insufficient practicality and reliability, can be solved.

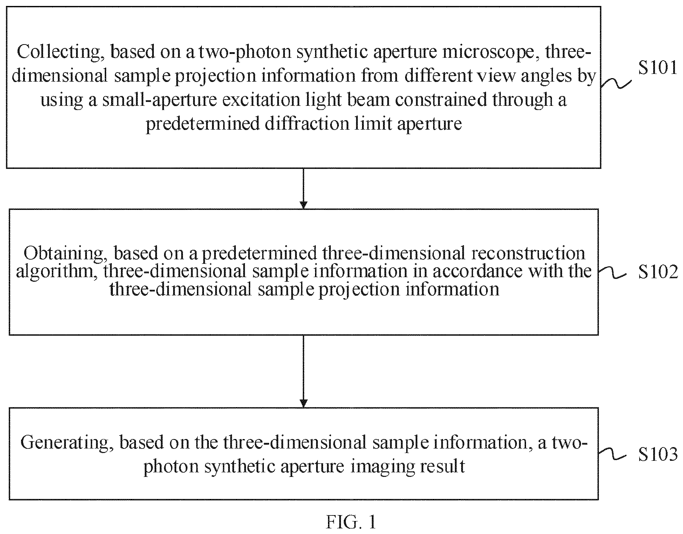

Specifically, FIG. 1 is a flowchart of a two-photon synthetic aperture imaging method based on a diffraction limit hole according to an embodiment of the present disclosure.

As illustrated in FIG. 1, the two-photon synthetic aperture imaging method based on the diffraction limit hole includes actions at blocks S101 to S103.

At block S101, based on a two-photon synthetic aperture microscope, three-dimensional sample projection information from different view angles is collected by using a small-aperture excitation light beam constrained through a predetermined diffraction limit hole.

It can be understood that, in the embodiment of the present disclosure, the corresponding three-dimensional sample projection information from different view angles can be collected in each small aperture in the two-photon synthetic aperture microscope. Moreover, the synthetic aperture microscope can expand a depth of field of the excitation by using a small aperture to obtain multi-view information of the observed three-dimensional sample. A predetermined diffraction limit size can refer to a diffraction limit size of a small aperture that is capable of expanding high-frequency component of the small aperture on an aperture plane of an objective lens.

It should be noted that the predetermined diffraction limit size is set by a person skilled in the art as desired, which is not specifically limited herein.

According to the embodiment of the present disclosure, based on the two-photon synthetic aperture microscope, the three-dimensional sample projection information from different view angles can be collected by using the small-aperture excitation light beam constrained through the predetermined diffraction limit hole, thereby expanding the high-frequency component of the excitation light and broadening a depth-of-field range observed by the microscope.

Specifically, in an embodiment of the present disclosure, a location of the predetermined diffraction limit hole in the two-photon synthetic aperture microscope is conjugated with an imaging plane.

It can be understood that, in the embodiment of the present disclosure, the expression that the position of the predetermined diffraction limit hole is conjugated with the imaging plane can refer to a relationship between an imaging plane of the observed sample and the diffraction limit hole belongs to a conjugate relationship, i.e., the diffraction limit hole is located at a conjugate position of the imaging plane in the two-photon synthetic aperture microscope. In this way, the depth of field can be expanded while guaranteeing a high space resolution of a sample observation result.

Further, in an embodiment of the present disclosure, a size of the predetermined diffraction limit hole is determined by a magnification factor from an imaging plane to the diffraction limit hole in the two-photon synthetic aperture microscope.

It can be understood that, in the embodiments of the present disclosure, the size of the predetermined diffraction limit hole corresponds to a diffraction limit of the small aperture and is determined by a numerical aperture (NA) of the small aperture excitation and a magnification factor between the imaging plane and the position of the diffraction limit hole.

During practical implementation, the diffraction limit holes in the two-photon synthetic aperture microscope can be collectively referred to as spatial constraint small holes. Due to a diffraction effect, the high-frequency component of a light beam passing through the spatial constraint small hole on the aperture plane of the objective lens can be expanded, and by reserving the obtained high-frequency information, the small aperture excitation maintains high space resolution while expanding an axial range, thereby enhancing final imaging quality of the sample.

In an embodiment of the present disclosure, a size of the predetermined diffraction limit hole is:

$$M * \frac{\lambda}{2 \times NA_{sub}},$$

where M is a magnification factor between an imaging plane and a position of the diffraction limit hole, $\lambda$ is a wavelength of the excitation light beam, and $NA_{sub}$ is a numerical aperture (NA) of a small aperture excitation.

During practical execution, in the two-photon synthetic aperture microscope, a ratio relationship between a numerical aperture of the objective lens $NA_{obj}$ and the numerical aperture of the small aperture excitation $NA_{sub}$ is $NA_{sub} = \alpha * NA_{obj}$, where $0 < \alpha \leq 1$. Therefore, the numerical aperture of the small aperture excitation is obtained based on the ratio relationship between the numerical aperture of the objective lens and the small aperture and a full aperture. Further, the size of the predetermined diffraction limit hole is obtained based on the wavelength of the excitation light beam and the magnification factor from the imaging plane to the diffraction limit hole.

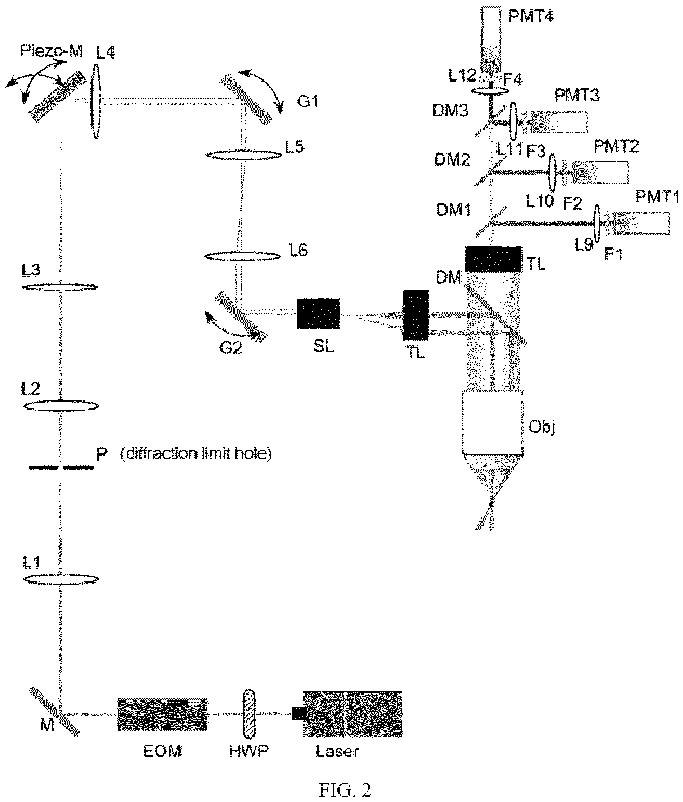

For example, FIG. 2 is a schematic operation diagram of a two-photon synthetic aperture microscope according to an embodiment of the present disclosure. Laser is used as a light source and can be a femtosecond pulse laser. A half-wave plate (HWP) and an electro-optic modulator (EOM) can both adjust energy of a back-end laser. By means of a reflector M, lenses (L1 to L6), a scanning lens (SL), and a tube lens (TL), the optical path controls a diameter of the light beam to be 1/10 of a diameter of a full aperture of the objective lens, i.e., $\alpha = 0.1$, as

$$NA_{sub} = 0.1 NA_{obj},$$

where $NA_{sub}$ is the numerical aperture of the small aperture excitation, and $NA_{obj}$ is the numerical aperture of the objective lens, $NA_{sub} = 1.05$. The location of the diffraction limit hole is conjugated with a phase plane of the objective lens. A diameter of the small hole is:

$$M * \frac{\lambda}{2 \times NA_{sub}} = 20 \frac{920nm}{2 * 0.105} \approx 100\mu m.$$

A Piezo-M changes an angle of the excitation light beam entering the three-dimensional sample below the objective lens, i.e., changing an incident position of a small aperture light beam on the aperture plane of the objective lens. The microscope implements a two-dimensional scanning by means of a resonance galvanometer (G1) and a linear galvanometer (G2). In a detection segment, four photomultiplier tubes (PMTs) are provided for single-point detection of fluorescence signals at different emission wavelengths. A dichroic mirror (DM) is provided to separate light in different wavelength ranges into corresponding filters (F1 to F4) and dichroic mirrors. Lenses (L9 to L12) are provided to improve efficiency of fluorescence collection.

According to the embodiment of the present disclosure, the size of the diffraction limit hole can be determined through calculation, and the small aperture excitation with a correspondingly determined size transversely moves on the aperture plane of the objective lens, to produce excitation effects of incidence at different angles, thereby obtaining projection images of the three-dimensional sample from different view angles. In this way, a clarity degree of sample observation can be enhanced.

At block S102, three-dimensional sample information is obtained in accordance with the three-dimensional sample projection information based on a predetermined three-dimensional reconstruction algorithm.

It can be understood that, in the embodiments of the present disclosure, the three-dimensional sample projection information from different view angles obtained in the previous step can be processed based on the predetermined three-dimensional reconstruction algorithm, and results of small aperture excitation from multiple view angles are synthesized into an image of large aperture excitation by using a synthetic aperture method, thereby obtaining the overall three-dimensional sample information of the sample.

It should be noted that the predetermined three-dimensional reconstruction algorithm is set by a person skilled in the art as desired, which is not specifically limited herein.

According to the embodiment of the present disclosure, based on the predetermined three-dimensional reconstruction algorithm, the three-dimensional sample information is obtained in accordance with the three-dimensional sample projection information, thereby implementing data processing and integration of the multi-view information collected by the diffraction limit hole. Thus, the space resolution of the obtained three-dimensional sample information can be improved.

At block S103, a two-photon synthetic aperture imaging result is generated based on the three-dimensional sample information.

It can be understood that, in the embodiment of the present disclosure, based on the three-dimensional sample projection information from different view angles obtained in the above step, the full-aperture three-dimensional sample information with high space resolution can be recovered by the three-dimensional reconstruction algorithm, thereby obtaining a two-photon synthetic aperture imaging result based on the diffraction limit hole.

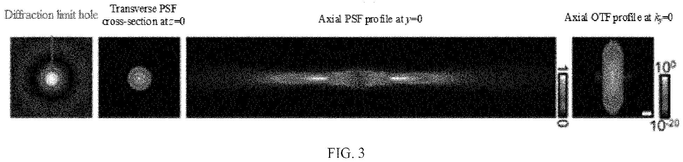

For example, FIG. 3 is a display diagram of a point spread function (PSF) and an optical transfer function (OTF) of a two-photon synthetic aperture microscope according to an embodiment of the present disclosure. The light beam passing through the diffraction limit hole can have extra extension at a high-frequency part due to a spatial constraint effect of the small hole. Therefore, the PSF of the light beam differs from a direct PSF of the small aperture. Thus, more high-frequency components based on the OTF can be observed.

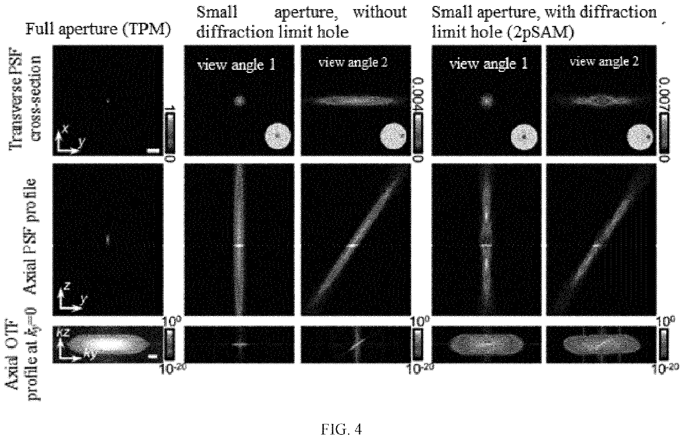

For another example, FIG. 4 is a schematic diagram illustrating a comparison of PSF and OTF of each of a conventional two-photon microscope (TPM), a conventional two-photon small aperture imaging microscope, and a two-photon synthetic aperture microscope (2pSAM) according to an embodiment of the present disclosure. The PSF and OTF, from two view angles, of each of the conventional two-photon microscope, the conventional two-photon small aperture imaging microscope, and the two-photon synthetic aperture microscope are compared. Based on the OTF profile of the conventional two-photon microscope under a full-aperture excitation still, it still has relatively strong energy at a high-frequency position. When the small aperture excitation is used (without the diffraction limit hole), an axial range of the PSF of the system is extended, and accordingly, transverse resolution rapidly drops. Hence, it can be concluded that a direct small aperture excitation results in a sharp decrease in the space resolution, with a significant loss of high-frequency information in the OTF. In the two-photon synthetic aperture microscope having the diffraction limit hole, the axial range of the PSF can be extended, and additionally, due to the spatial constraint effect of the small hole, the high-frequency component of the OTF can be preserved, thereby allowing a high space resolution capability when performing a quick body imaging.

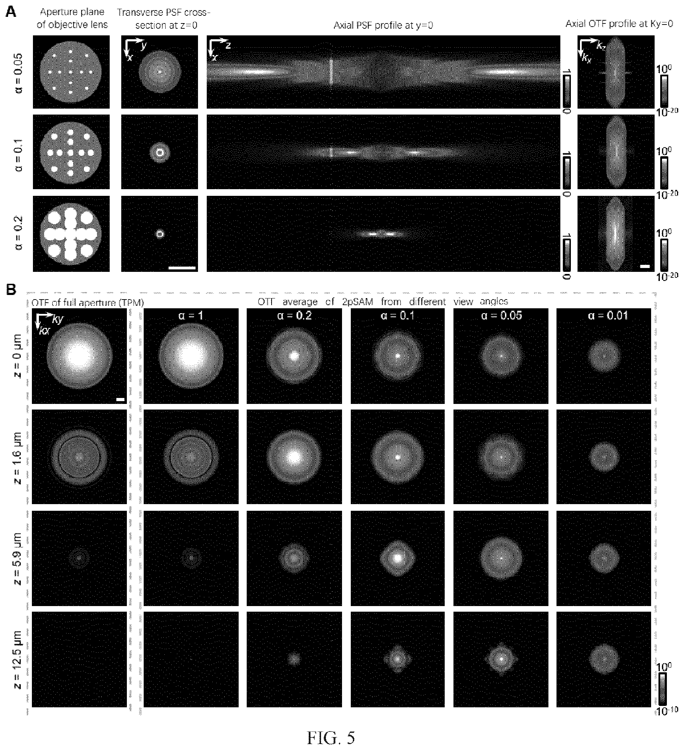

For another example, FIG. 5 is a schematic diagram illustrating a comparison of PSF and OTF of a two-photon synthetic aperture microscope with a size variable of a diffraction limit hole according to an embodiment of the present disclosure. The small hole is configured to spatially constrain an incident light beam, and a change in an actual size of the small hole does not affect its spatial constraint function. Based on a theoretical analysis on a small hole effect, it can be learned that a balance effect of the performances of the two-photon synthetic aperture microscope can most satisfy the requirements for most biological sample imaging when the diameter of the small hole is approximately equal to the diffraction limit size of the small aperture.

Specifically, it can be seen from simulation results illustrated in FIG. 5 that, with an increase in the diameter of the spatial constraint small hole, an axial range covered by the PSF is broadened, and the high-frequency component of the OTF becomes weaker, i.e., the space resolution becomes lower. In contrast, with a decrease in the diameter of the spatial constraint small hole, the high-frequency component of its OTF becomes stronger, i.e., the space resolution is higher, and the axial range covered by the PSF is smaller. D.L. is a unit of the small aperture diffraction limit size. In a process of observing a change of the diameter of the spatial constraint small hole from small to large, observation is performed in a range of 0.1D.L. to 2D.L., and the result obtained from a change of a transverse OTF further matches the above conclusion. When the diameter of the spatial constraint small hole is 0.1D.L., the OTF thereof is basically consistent with the OTF of the full aperture, i.e., at an imaging level with a high space resolution capability and a low axial coverage range. When the diameter of the spatial constraint small hole increases to 2D.L. or even greater than 2D.L., the imaging level is close to that of a small aperture imaging system without the spatial constraint small hole, i.e., a great axial coverage range but a severe loss in high-frequency space resolution. In conclusion, a spatial constraint capability of the small hole becomes weaker as its diameter increases, and becomes stronger as its diameter decreases.

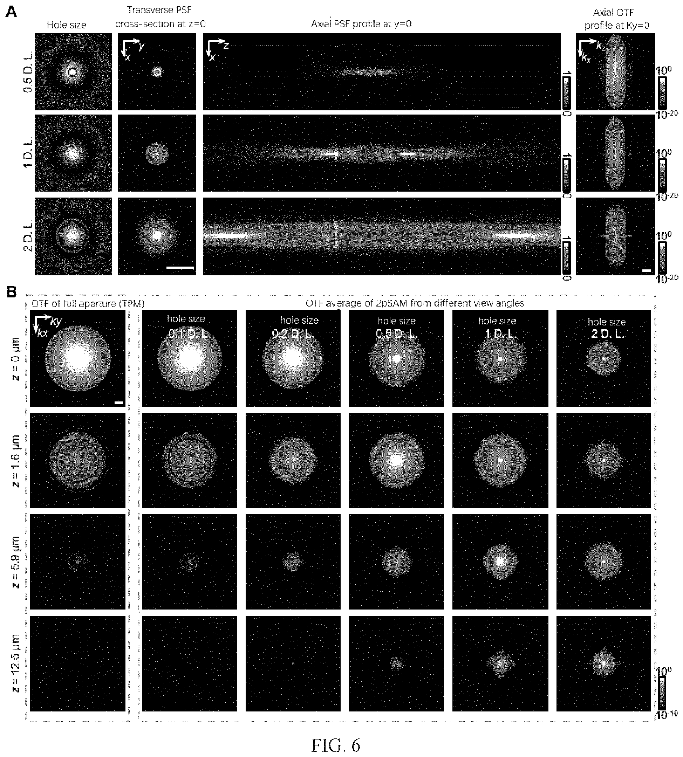

For another example, FIG. 6 is a schematic diagram illustrating a comparison of PSF and OTF of a two-photon synthetic aperture microscope with a numerical aperture variable of a diffraction limit hole according to an embodiment of the present disclosure. When the diameter of the spatial constraint small hole is equal to the diffraction limit size of the small aperture, a compromise between a size of the axial range and the space resolution is reflected in variation of a ratio $\alpha$ of the small aperture to the great aperture. With $\alpha=1$, the small aperture excitation is essentially equivalent to great aperture excitation, exhibiting a high space resolution and a weak single-layer imaging capability. However, as $\alpha$ decreases, the axial range thereof expands, and the overall performance is superior to that of the aperture without the diffraction limit hole despite a decrease in space resolution.

According to the embodiment of the present disclosure, the two-photon synthetic aperture imaging result can be generated based on the three-dimensional sample information, and the diffraction limit hole exerts the spatial constraint effect on the excitation light beam in the two-photon synthetic aperture microscope, allowing the two-photon synthetic aperture microscope to have a rapid body imaging capability and maintain high space resolution. As a result, the rapid and efficient high-quality imaging of the two-photon microscope can be achieved.

With the two-photon synthetic aperture imaging method based on the diffraction limit hole provided according to the embodiments of the present disclosure, the three-dimensional sample projection information from different view angles can be obtained by using the diffraction limit hole, to obtain the three-dimensional imaging result of the two-photon synthetic aperture microscope, thereby expanding the high-frequency component of the excitation light and improving the body imaging speed of the microscope and the space resolution of the imaging result. Thus, the rapid and efficient high-quality sample imaging can be achieved, and consequently, the method is more practical and reliable. In this way, the problems in the related art, i.e., when the depth-of-field range is enlarged by using the small aperture excitation, the transverse resolution of an imaging result is lowered, which affects quality of a final imaging result, such that it is impossible to improve a resolution of a three-dimensional imaging space of the sample while guaranteeing a high-speed body imaging of the microscope, and the insufficient practicality and reliability, can be solved.

A two-photon synthetic aperture imaging apparatus based on a diffraction limit hole according to an embodiment of the present disclosure is described with reference to the drawings.

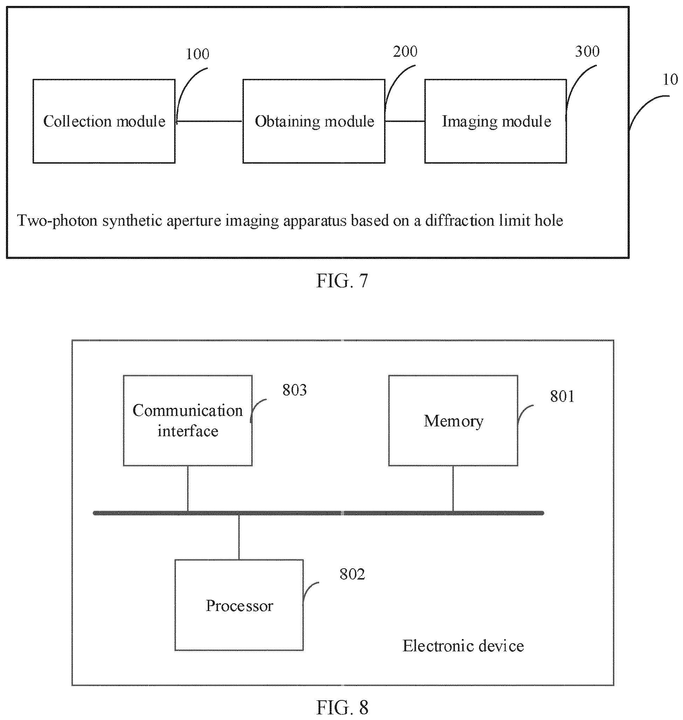

FIG. 7 is a structural schematic diagram of a two-photon synthetic aperture imaging apparatus based on a diffraction limit hole according to an embodiment of the present disclosure.

As illustrated in FIG. 7, the two-photon synthetic aperture imaging apparatus 10 based on the diffraction limit hole includes a collection module 100, an obtaining module 200, and an imaging module 300.

The collection module 100 is configured to collect, based on a two-photon synthetic aperture microscope, three-dimensional sample projection information from different view angles by using a small-aperture excitation light beam constrained through a predetermined diffraction limit hole.

The obtaining module 200 is configured to obtain, based on a predetermined three-dimensional reconstruction algorithm, three-dimensional sample information in accordance with the three-dimensional sample projection information.

The imaging module 300 is configured to generate, based on the three-dimensional sample information, a two-photon synthetic aperture imaging result.

Specifically, in an embodiment of the present disclosure, a location of the predetermined diffraction limit hole in the two-photon synthetic aperture microscope is conjugated with an imaging plane.

Further, in an embodiment of the present disclosure, a size of the predetermined diffraction limit hole is determined by a magnification factor from an imaging plane to the diffraction limit hole in the two-photon synthetic aperture microscope.

In an embodiment of the present disclosure, a size of the predetermined diffraction limit hole is:

$$M * \frac{\lambda}{2 \times NA_{sub}},$$

where M is a magnification factor between an imaging plane and a position of the diffraction limit hole, $\lambda$ is a wavelength of the excitation light beam, and $NA_{sub}$ is a numerical aperture of a small aperture excitation.

It should be noted that the above explanation and description of the embodiments involving the two-photon synthetic aperture imaging method based on the diffraction limit hole are also applicable to the two-photon synthetic aperture imaging apparatus based on the diffraction limit hole according to the present embodiment, and thus details thereof will be omitted herein.

With the two-photon synthetic aperture imaging apparatus based on the diffraction limit hole according to the present embodiment, the three-dimensional sample projection information from different view angles can be obtained by using the diffraction limit hole, to obtain the three-dimensional imaging result of the two-photon synthetic aperture microscope, thereby expanding the high-frequency component of the excitation light and improving the body imaging speed of the microscope and the space resolution of the imaging result. Consequently, the apparatus is more practical and reliable. Therefore, the problems in the related art, i.e., when the depth-of-field range is enlarged by using the small aperture excitation, the transverse resolution of an imaging result is lowered, which affects quality of a final imaging result, such that it is impossible to improve a resolution of a three-dimensional imaging space of the sample while guaranteeing a high-speed body imaging of the microscope, and the insufficient practicality and reliability, can be solved.

FIG. 8 is a structural schematic diagram of an electronic device according to an embodiment of the present disclosure. The electronic device may include a memory 801, a processor 802, and a computer program stored in the memory 801 and executable on the processor 802. The processor 802, when executing the computer program, implements the two-photon synthetic aperture imaging method based on the diffraction limit hole according to the above embodiments.

Further, the electronic device further includes a communication interface 803 configured to communicate between the memory 801 and the processor 802, and the memory 801 storing a computer program executable on the processor 802. The memory 801 may include a high-speed Random Access Memory (RAM), and a non-volatile memory, such as at least one disk memory.

When the memory 801, the processor 802, and the communication interface 803 are implemented independently, the communication interface 803, the memory 801, and the processor 802 can be interconnected and communicate with each other via a bus. The bus can be an Industry Standard Architecture (ISA) bus, a Peripheral Component (PCI) bus, or an Extended Industry Standard Architecture (EISA) bus. The buses can be divided into an address bus, a data bus, a control bus, etc. For the convenience of description, only one thick line is used in FIG. 8, but it does not mean that there is only one bus or one type of bus.

Optionally, in a specific implementation, when the memory 801, the processor 802, and the communication interface 803 are integrated on a single chip, the memory 801, the processor 802, and the communication interface 803 can communicate with each other through an internal interface.

The processor 802 can be a Central Processing Unit (CPU), or an Application Specific Integrated Circuit (ASIC), or one or more integrated circuits configured to implement an embodiment of the present disclosure.

An embodiment further provides a computer-readable storage medium having a computer program stored thereon. The computer program, when executed by a processor, implements a method for calculating a carbon emission flow facing towards a regional integrated energy system as described above.

In the specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics can be combined in any one or more embodiments or examples in a suitable manner. In addition, those skilled in the art can combine the different embodiments or examples and the features of the different embodiments or examples described in this specification without contradicting each other.

In addition, the terms "first" and "second" are only used for descriptive purposes, and they cannot be understood as indicating or implying relative importance or implicitly indicating the number of indicated technical features. Therefore, the features defined with "first" and "second" can explicitly or implicitly include at least one of the features. In the description of the present disclosure, "N" means at least two, such as two, three, etc., unless otherwise specifically defined.

Any process or method described in a flowchart or described herein in other ways can be understood to include one or N modules, segments, or portions of codes of executable instructions for achieving specific logical functions or steps in the process. The scope of a preferred embodiment of the present disclosure includes other implementations. A function can be performed not in a sequence shown or discussed, including a substantially simultaneous manner or a reverse sequence based on the function involved, which should be understood by those skilled in the art to which the embodiments of the present disclosure belong.

The logic and/or step described in other manners herein or illustrated in the flowchart, for example, a particular sequence table of executable instructions for realizing the logical function, can be specifically implemented in any computer readable medium to be used by the instruction execution system, device or equipment (such as the system based on computers, the system including processors or other systems capable of obtaining the instructions from the instruction execution system, device and equipment and executing the instructions), or to be used in combination with the instruction execution system, device and equipment. As to the specification, "the computer readable medium" can be any device adaptive for including, storing, communicating, propagating or transferring programs to be used by or in combination with the instruction execution system, device or equipment. More specific examples of the computer readable medium include, but are not limited to: an electronic connection (an electronic device) with one or N wires, a portable computer disk case (a magnetic device), a random access memory (RAM), a read only memory (ROM), an erasable programmable read-only memory (EPROM or a flash memory), an optical fiber device and a portable compact disk read-only memory (CDROM). In addition, the computer readable medium can even be a paper or other appropriate medium capable of being printed with programs thereon, this is because, for example, the paper or other appropriate medium can be optically scanned and then edited, decrypted or processed with other appropriate methods when necessary to obtain the programs in an electric manner, and then the programs can be stored in the computer memory.

It should be understood that each part of the present disclosure can be realized by the hardware, software, firmware or their combination. In the above embodiments, N steps or methods can be realized by the software or firmware stored in the memory and executed by the appropriate instruction execution system. For example, if it is realized by the hardware, the steps or methods can be realized by one or a combination of the following techniques known in the art, i.e., a discrete logic circuit having a logic gate circuit for realizing a logic function of a data signal, an application-specific integrated circuit having an appropriate combination logic gate circuit, a programmable gate array (PGA), and a field programmable gate array (FPGA), etc.

Those skilled in the art shall understand that all or parts of the steps in the above method of the embodiments of the present disclosure can be achieved by instructing the related hardware by programs. The programs can be stored in a computer readable storage medium, and the programs include one or a combination of the steps in the method embodiments of the present disclosure when run on a computer.

In addition, each function unit of the embodiments of the present disclosure can be integrated in a processing module, or these units can exist separately physically, or two or more units can be integrated in a processing module. The integrated module can be embodied in the form of hardware or software function module. When the integrated module is embodied in the form of software function module and sold or used as a standalone product, the integrated module can be stored in a computer readable storage medium.

The above-mentioned storage medium can be read-only memories, magnetic disks, CD, etc. Although embodiments according to the present disclosure have been illustrated and described as above, those skilled in the art would know that the above embodiments are merely illustrative and cannot be construed to limitations on the present disclosure, and they can make changes, alternatives, modifications, and variations to these embodiments without departing from scope of the present disclosure.

**Claims**

1. A two-photon synthetic aperture imaging method based on a diffraction limit hole, comprising:

   collecting (S101), based on a two-photon synthetic aperture microscope, three-dimensional sample projection information from different view angles by using a small-aperture excitation light beam constrained through a predetermined diffraction limit hole;
   obtaining (S102), based on a predetermined three-dimensional reconstruction algorithm, three-dimensional sample information in accordance with the three-dimensional sample projection information; and
   generating (S103), based on the three-dimensional sample information, a two-photon synthetic aperture imaging result,

**characterized in that** a size of the predetermined diffraction limit hole is determined by a magnification factor from an imaging plane to the diffraction limit hole in the two-photon synthetic aperture microscope,

wherein the size of the predetermined diffraction limit hole is:

$$M * \frac{\lambda}{2 \times NA_{sub}},$$

where M is a magnification factor between the imaging plane and a position of the diffraction limit hole, $\lambda$ is a wavelength of the excitation light beam, and $NA_{sub}$ is a numerical aperture of a small aperture excitation.

2. The method according to claim 1, wherein a location of the predetermined diffraction limit hole in the two-photon synthetic aperture microscope is conjugated with an imaging plane.

3. A two-photon synthetic aperture imaging apparatus based on a diffraction limit hole, comprising:

a two-photon synthetic aperture microscope;
a predetermined diffraction limit hole;
a collection module (100) configured to collect, based on the two-photon synthetic aperture microscope, three-dimensional sample projection information from different view angles by using a small-aperture excitation light beam constrained through the predetermined diffraction limit hole;
an obtaining module (200) configured to obtain, based on a predetermined three-dimensional reconstruction algorithm, three-dimensional sample information in accordance with the three-dimensional sample projection information; and
an imaging module (300) configured to generate, based on the three-dimensional sample information, a two-photon synthetic aperture imaging result,
**characterized in that** a size of the predetermined diffraction limit hole is determined by a magnification factor from an imaging plane to the diffraction limit hole in the two-photon synthetic aperture microscope,
wherein the size of the predetermined diffraction limit hole is:

$$M * \frac{\lambda}{2 \times NA_{sub}},$$

where M is a magnification factor between the imaging plane and a position of the diffraction limit hole, $\lambda$ is a wavelength of the excitation light beam, and $NA_{sub}$ is a numerical aperture of a small aperture excitation.

4. The apparatus according to claim 3, wherein a location of the predetermined diffraction limit hole in the two-photon synthetic aperture microscope is conjugated with an imaging plane.

5. An electronic device, comprising:

a two-photon synthetic aperture microscope;
a predetermined diffraction limit hole;
a memory (801);
a processor (802); and
a computer program stored on the memory (801) and executable on the processor (802), wherein the processor (802) executes the program to implement the two-photon synthetic aperture imaging method based on the diffraction limit hole according to claim 1 or 2.

6. A computer-readable storage medium, having a computer program stored thereon, wherein the program is executed by a processor of an electronic device according to claim 5 to implement the two-photon synthetic aperture imaging method based on the diffraction limit hole according to claim 1 or 2.

**Patentansprüche**

1. Zwei-Photonen-Synthetikapertur-Bildgebungsverfahren basierend auf einem Beugungsgrenzenloch, umfassend:

Erfassen (S101), basierend auf einem Zwei-Photonen-Synthetikapertur-Mikroskop, von dreidimensionalen Probenprojektionsinformationen aus verschiedenen Betrachtungswinkeln unter Verwendung eines durch ein vorbestimmtes Beugungsgrenzenloch begrenzten Klein-Apertur-Anregungslichtstrahls;
Erhalten (S102), basierend auf einem vorbestimmten dreidimensionalen Rekonstruktionsalgorithmus, von dreidimensionalen Probeninformationen gemäß der dreidimensionalen Probenprojektionsinformation; und
Erzeugen (S103), basierend auf den dreidimensionalen Probeninformationen, eines Zwei-Photonen-Synthetikapertur-Bildgebungsergebnisses,
**dadurch gekennzeichnet, dass** eine Größe des vorbestimmten Beugungsgrenzlochs durch einen Vergrößerungsfaktor von einer Bildgebungsebene zu dem Beugungsgrenzloch in dem Zwei-Photonen-Synthetikapertur-Mikroskop bestimmt wird.,
wobei die Größe des vorbestimmten Beugungsgrenzlochs wie folgt ist:

$$M * \frac{\lambda}{2 \times NA_{sub}},$$

wobei $M$ ein Vergrößerungsfaktor zwischen der Bildgebungsebene und einer Position des Beu-gungsgrenzlochs ist, $\lambda$ eine Wellenlänge des Anregungslichtstrahls ist und $NA_{sub}$ eine numerische Apertur einer kleinen Apertur-Anregung ist.

2. Verfahren nach Anspruch 1, wobei eine Position des vorbestimmten Beugungsgrenzlochs im Zwei-Photonen-Synthetikapertur-Mikroskop mit einer Bildgebungsebene konjugiert ist.

3. Zwei-Photonen-Synthetikapertur-Bildgebungsvor-richtung basierend auf einem Beugungsgrenzen-loch, umfassend:

   ein Zwei-Photonen-Synthetikapertur-Mikroskop
   ein vorbestimmtes Beugungsgrenzenloch;
   ein Sammelmodul (100), das so konfiguriert ist, dass es, basierend auf einem Zwei-Photonen-Synthetikapertur-Mikroskop, dreidimensionale Probenprojektionsinformationen aus verschiedenen Betrachtungswinkeln unter Verwendung eines durch ein vorbestimmtes Beugungsgren-zenloch begrenzten Klein-Apertur-Anregungs-lichtstrahls erfasst;
   ein Erfassungsmodul (200), das so konfiguriert ist, dass es, basierend auf einem vorbestimmt dreidimensionalen Rekonstruktionsalgorith-mus, dreidimensionale Probeninformationen gemäß der dreidimensionalen Probenprojektionsinformation; und
   ein Bildgebungsmodul (300), das so konfiguriert ist, dass es, basierend auf den dreidimensiona-len Probeninformationen, eines Zwei-Photo-nen-Synthetikapertur-Bildgebungsergebnisses erzeugt,
   **dadurch gekennzeichnet, dass** eine Größe des vorbestimmten Beugungsgrenzlochs durch einen Vergrößerungsfaktor von einer Bildgebungsebene zu dem Beugungsgrenzloch in dem Zwei-Photonen-Synthetikapertur-Mikroskop bestimmt wird.,
   wobei die Größe des vorbestimmten Beugungsgrenzlochs wie folgt ist:

$$M * \frac{\lambda}{2 \times NA_{sub}},$$

wobei $M$ ein Vergrößerungsfaktor zwischen der Bildgebungsebene und einer Position des Beu-gungsgrenzlochs ist, $\lambda$ eine Wellenlänge des Anregungslichtstrahls ist und $NA_{sub}$ eine numerische Apertur einer kleinen Apertur-Anregung ist.

4. Vorrichtung nach Anspruch 3, wobei eine Position des vorbestimmten Beugungsgrenzlochs im Zwei-Photonen-Synthetikapertur-Mikroskop mit einer Bildgebungsebene konjugiert ist.

5. Elektronisches Gerät, umfassend:

   ein Zwei-Photonen-Synthetikapertur-Mikroskop
   ein vorbestimmtes Beugungsgrenzenloch;
   ein Speicher (801);
   einen Prozessor (802); und
   ein auf dem Speicher (801) gespeichertes und auf dem Prozessor (802) ausführbares Computerprogramm,
   wobei der Prozessor (802) das Programm ausführt, um das Zwei-Photonen-Synthetikapertur-Bildgebungsverfahren basierend auf einem Beugungsgrenzenloch gemäß Anspruch 1 oder 2 zu implementieren.

6. Computerlesbares Speichermedium, auf dem ein Computerprogramm gespeichert ist, wobei das Programm von einem Prozessor eines elektronischen Geräts gemäß Anspruch 5 ausgeführt wird, um das Zwei-Photonen-Synthetikapertur-Bildgebungsverfahren basierend auf einem Beugungsgrenzenloch gemäß Anspruch 1 oder 2 zu implementieren.

**Revendications**

1. Procédé d'imagerie par ouverture synthétique à deux photons basé sur un trou limite de diffraction, comprenant :

   la collecte (S101), sur la base d'un microscope à ouverture synthétique à deux photons, d'informations de projection tridimensionnelle d'échantillon sous différents angles de vue à l'aide d'un faisceau d'excitation à petite ouverture contraint par un trou limite de diffraction prédéterminé ;
   l'obtention (S102), sur la base d'un algorithme de reconstruction tridimensionnelle prédéterminé, d'informations tridimensionnelles d'échantillon conformément aux informations de projection tridimensionnelle d'échantillon ; et
   la génération (S103), sur la base des informations tridimensionnelles d'échantillon, d'un résultat d'imagerie par ouverture synthétique à deux photons,

**caractérisé en ce que** la taille du trou limite de diffraction prédéterminé est déterminée par un facteur de grossissement du plan d'imagerie au trou limite de diffraction dans le microscope à ouverture synthétique à deux photons,

ladite taille du trou limite de diffraction prédéterminé étant :

$$M * \frac{\lambda}{2 \times NA_{sub}},$$

où *M* est un facteur de grossissement entre le plan d'imagerie et la position du trou limite de diffraction, $\lambda$ est une longueur d'onde du faisceau d'excitation, et $NA_{sub}$ est une ouverture numérique d'excitation à petite ouverture.

2. Procédé selon la revendication 1, **caractérisé en ce qu'**une position du trou limite de diffraction prédéterminé dans le microscope à ouverture synthétique à deux photons est conjuguée à un plan d'imagerie.

3. Appareil d'imagerie par ouverture synthétique à deux photons basé sur un trou limite de diffraction, comprenant :

un microscope à ouverture synthétique à deux photons ;
un trou limite de diffraction prédéterminé ;
un module de collecte (100) configuré pour collecter, sur la base du microscope à ouverture synthétique à deux photons, des informations de projection tridimensionnelle d'échantillon sous différents angles de vue à l'aide d'un faisceau d'excitation à petite ouverture contraint par le trou limite de diffraction prédéterminé ;
un module d'obtention (200) configuré pour obtenir, sur la base d'un algorithme de reconstruction tridimensionnelle prédéterminé, des informations tridimensionnelles d'échantillon conformément aux informations de projection tridimensionnelle d'échantillon ; et
un module d'imagerie (300) configuré pour générer, sur la base des informations tridimensionnelles d'échantillon, un résultat d'imagerie par ouverture synthétique à deux photons,
**caractérisé en ce que** la taille du trou limite de diffraction prédéterminé est déterminée par un facteur de grossissement du plan d'imagerie au trou limite de diffraction dans le microscope à ouverture synthétique à deux photons,
ladite taille du trou limite de diffraction prédéterminé étant :

$$M * \frac{\lambda}{2 \times NA_{sub}},$$

où *M* est un facteur de grossissement entre le plan d'imagerie et la position du trou limite de diffraction, $\lambda$ est une longueur d'onde du faisceau d'excitation, et $NA_{sub}$ est une ouverture numérique d'excitation à petite ouverture.

4. Appareil selon la revendication 3, **caractérisé en ce qu'**une position du trou limite de diffraction prédéterminé dans le microscope à ouverture synthétique à deux photons est conjuguée à un plan d'imagerie.

5. Dispositif électronique, comprenant :

un microscope à ouverture synthétique à deux photons ;
un trou limite de diffraction prédéterminé ;
une mémoire (801) ;
un processeur (802) ; et
un programme informatique stocké sur la mémoire (801) et exécutable sur le processeur (802),
le processeur (802) exécutant le programme pour mettre en œuvre le procédé d'imagerie par ouverture synthétique à deux photons basé sur un trou limite de diffraction selon la revendication 1 ou 2.

6. Support de stockage lisible par ordinateur, sur lequel est stocké un programme informatique, le programme étant exécuté par un processeur d'un dispositif électronique selon la revendication 5 pour mettre en œuvre le procédé d'imagerie par ouverture synthétique à deux photons basé sur un trou limite de diffraction selon la revendication 1 ou 2.

Collecting, based on a two-photon synthetic aperture microscope, three-dimensional sample projection information from different view angles by using a small-aperture excitation light beam constrained through a predetermined diffraction limit aperture — S101

Obtaining, based on a predetermined three-dimensional reconstruction algorithm, three-dimensional sample information in accordance with the three-dimensional sample projection information — S102

Generating, based on the three-dimensional sample information, a two-photon synthetic aperture imaging result — S103

FIG. 1

FIG. 2

Diffraction limit hole    Transverse PSF cross-section at $z=0$    Axial PSF profile at $y=0$    Axial OTF profile at $k_y=0$

FIG. 3

FIG. 4

FIG. 5

FIG. 6

100    200    300

10

Collection module — Obtaining module — Imaging module

Two-photon synthetic aperture imaging apparatus based on a diffraction limit hole

FIG. 7

803    801

Communication interface    Memory

802

Processor

Electronic device

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310220180

- CN 113466190 A